# EUROPEAN PATENT APPLICATION

(11) **EP 3 444 716 A1**
(43) Date of publication of application: **20.02.2019**
(21) Application number: 18198356.0
(22) Date of filing: 25.02.2016
(51) Int. Cl.: G06F 3/14

(54) **APPARATUS AND METHOD FOR PROVIDING SCREEN MIRRORING SERVICE**

(30) Priority: 27.02.2015 KR 20150028660
(62) Divisional of application: 16157324.1
(71) Applicant: Samsung Electronics Co., Ltd., Suwon-si, Gyeonggi-do 16677 (KR)
(72) Inventor: Choi, Yongha, Gyeonggi-do (KR); Kim, Taehyung, Gyeonggi-do (KR)
(74) Representative: Nederlandsch Octrooibureau

(57) **Abstract**

An apparatus and method for providing a screen mirroring service. The apparatus includes a communication unit for connecting to an external device; and a control unit for generating a plurality of screen data, transmitting one of the plurality of screen data to the external device, and controlling the screen data being transmitted to the external device according to a control signal received from the external device.

## Description

### BACKGROUND OF THE INVENTION

This is a divisional patent application from European Patent Application No. 16157324.1. All description, claims and drawings as filed in the parent application are incorporated in the present patent application.

### 1. Field of the Invention

The present invention relates generally to an apparatus and method for providing a screen mirroring service and, more particularly, to an apparatus and method for providing a screen mirroring service capable of, upon occurrence of a control signal, performing a function corresponding to the control signal, according to an operation mode being set in an application that is being executed.

### 2. Description of the Related Art

Recently, varying concerns regarding the use of digital multimedia services such as videos, games, etc., using portable electronic devices have been increasing. For example, due to limitations of the sizes of screens provided in portable electronic devices, portable electronic devices may not be suitable for many people to simultaneously check digital multimedia data output by these devices. Due to this problem, there has been a trend in which portable electronic devices having a television (TV) out function, such as screen mirroring, etc., capable of outputting digital multimedia signals to a large display, such as a TV, a monitor, and a projector, etc. are increasingly manufactured and released.

External devices that output digital multimedia received via the TV out function of portable electronic device can identically perform digital multimedia operations of the corresponding portable electronic devices, according to control operations performed by the portable electronic devices. However, the external devices are not able to control the portable electronic devices.

### SUMMARY OF THE INVENTION

The present disclosure has been made to address at least the above problems and/or disadvantages and to provide at least the advantages described below. An aspect of the present invention is to provide an apparatus and method for providing a screen mirroring service capable of, if a control signal is generated in any one external device among at least one external device performing screen mirroring with an electronic device, upon control signal generation, checking an operation mode having been set in an application, and performing a function corresponding to the control signal and the operation mode.

This document includes embodiments that are not claimed.

The present invention is according to the claims.

According to another aspect of the present invention, an electronic device is provided. The electronic device includes a communication unit for connecting to an external device; and a control unit for generating a plurality of screen data, transmitting one of the plurality of screen data to the external device, and controlling the screen data being transmitted to the external device according to a control signal received from the external device.

According to another aspect of the present invention, an electronic device is provided. The electronic device includes a communication interface; a display; a processor electrically connected with the communication interface and the display; and a memory electrically connected with the processor. The memory stores instructions that, at execution, enables the processor to generate first image frame data and second image frame data, transmit the first image frame data to an external device through the communication interface while displaying the second image frame data on the display, receive, through the communication interface, a signal related to an input received by the external device, perform, in response to the signal, at least one of a change of at least a part of the first image frame data and an operation related to the first image frame data, and transmit a signal related to at least one of the changed first image frame data and the operation to the external device through the communication interface.

According to another aspect of the present invention, an electronic device is provided. The electronic device includes a communication interface; a display; a processor electrically connected with the communication interface and the display; and a memory electrically connected with the processor. The memory stores instructions that, at execution, enables the processor to generate first image frame data and second image frame data, transmit the first image frame data to a first external device through the communication interface while displaying the second image frame data on the display and transmitting the second image frame data to a second external device through the communication interface, receive, through the communication interface, a first signal related to an input received from the first external device, perform, in response to the first signal, at least one of a change of at least a part of the first image frame data and an operation related to the first image frame data, transmit a first signal related to at least one of the changed first image frame data and the operation related to the first image frame data to the first external device through the communication interface, receive, through the communication interface, a second signal related to an input received by the second external device, perform, in response to the second signal, at least one of a change of at least a part of the second image frame data and an operation related to the second image frame data, and display a third signal related to at least one of the changed second image frame data and the operation related to the second image frame data on the display while transmitting the third signal to the second external device through the communication interface.

According to an aspect of the present invention, a method is provided. The method includes connecting to an external device; generating a plurality of screen data; transmitting one of the plurality of screen data to the external device; and controlling the screen data being transmitted to the external device according to a control signal received from the external device.

According to another aspect of the present invention, a method is provided. The method includes generating first image frame data and second image frame data; transmitting the first image frame data to an external device while displaying the second image frame data on a display; receiving a signal related to an input received by the external device; performing, in response to the signal, at least one of a change of at least a part of the first image frame data and an operation related to the first image frame data; and transmitting a signal related to at least one of the changed first image frame data and the operation to the external device.

According to another aspect of the present invention, a method is provided. The method includes generating first image frame data and second image frame data; transmitting the first image frame data to a first external device while displaying the second image frame data and transmitting the second image frame data to a second external device; receiving a first signal related to an input received from the first external device; performing, in response to the first signal, at least one of a change of at least a part of the first image frame data and an operation related to the first image frame data; transmitting a first signal related to at least one of the changed first image frame data and the operation related to the first image frame data to the first external device; receiving a second signal related to an input received by the second external device; performing, in response to the second signal, at least one of a change of at least a part of the second image frame data and an operation related to the second image frame data; and displaying a third signal related to at least one of the changed second image frame data and the operation related to the second image frame data while transmitting the third signal to the second external device generating first image frame data and second image frame data; transmitting the first image frame data to a first external device while displaying the second image frame data and transmitting the second image frame data to a second external device; receiving a first signal related to an input received from the first external device; performing, in response to the first signal, at least one of a change of at least a part of the first image frame data and an operation related to the first image frame data; transmitting a first signal related to at least one of the changed first image frame data and the operation related to the first image frame data to the first external device; receiving a second signal related to an input received by the second external device; performing, in response to the second signal, at least one of a change of at least a part of the second image frame data and an operation related to the second image frame data; and displaying a third signal related to at least one of the changed second image frame data and the operation related to the second image frame data while transmitting the third signal to the second external device.

### BRIEF DESCRIPTION OF THE DRAWINGS

The above and other aspects, features and advantages of the present invention will become more apparent from the following detailed description when taken in conjunction with the accompanying drawings in which:
FIG. 1 is a diagram illustrating a network environment including an electronic device according to an embodiment of the present invention;
FIG. 2 is a block diagram illustrating a key construction of an electronic device according to an embodiment of the present invention;
FIG. 3 is a block diagram illustrating a program module according to an embodiment of the present invention;
FIG. 4 is a diagram illustrating a system for providing a screen mirroring service according to an embodiment of the present invention;
FIGs. 5A and 5B are diagrams for explaining a method of transforming a coordinate of a control signal generated in an external device according to an embodiment of the present invention;
FIG. 6 is a block diagram illustrating a key construction of an electronic device providing a screen mirroring service according to an embodiment of the present invention;
FIG. 7 is a ladder diagram illustrating a flow of data in providing a screen mirroring service according to an embodiment of the present invention;
FIG. 8 is a flowchart for explaining a method of performing a screen mirroring service with an external device in an electronic device according to an embodiment of the present invention;
FIG. 9 is a diagram of an example screen according to a method of providing a screen mirroring service in an electronic device and an external device according to an embodiment of the present invention;
FIG. 10 is a ladder diagram illustrating a flow of data in providing a screen mirroring service according to another embodiment of the present invention;
FIG. 11 is a flowchart illustrating a method of performing a screen mirroring service with an external device in an electronic device according to another embodiment of the present invention; and
FIG. 12 and FIG. 13 are diagrams illustrating examples of screens according to a method of providing a screen mirroring service in an electronic device and an external device according to another embodiment of the present invention.

### DETAILED DESCRIPTION

Embodiments of the present disclosure are described with reference to the accompanying drawings. The same or similar components may be designated by the same or similar reference numerals although they are illustrated in different drawings. Detailed descriptions or constructions or processes known in the art may be omitted to avoid obscuring the subject matter of the present disclosure.

The terms "have", "may have", "include", or "may include", as used herein, refer to the existence of a corresponding feature (e.g., numeral, function, operation, or constituent element such as component), and do not exclude the presence of one or more additional features.

The expressions "A or B", "at least one of A or/and B", or "one or more of A or/and B", as used herein, may include all possible combinations of the items listed. For example, the expression "A or B", "at least one of A and B", or "at least one of A or B" includes all of (1) at least one A, (2) at least one B, or (3) both at least one A and at least one B.

The expressions "a first", "a second", "the first", or "the second", as used herein with reference to various embodiments of the present disclosure may modify various components regardless of the order and/or the importance of the components, but do not limit the corresponding components. For example, a first user device and a second user device indicate different user devices, although both of the devices are user devices. For example, a first element may be referred to as a second element, and similarly, a second element may be referred to as a first element without departing from the scope of the present invention.

Herein, when an element (e.g., first element) is referred to as being (operatively or communicatively) "connected," or "coupled," to another element (e.g., second element), the element may be directly connected or coupled directly to the other element, or any other element (e.g., third element) may be interposed between them. By contrast, when an element (e.g., first element) is referred to as being "directly connected," or "directly coupled" to another element (second element), there are no intervening elements (e.g., third element) interposed between the first and second elements.

The expression "configured to" as used herein, may be replaced with, for example, "suitable for", "having the capacity to", "designed to", "adapted to", "made to", or "capable of' according to a context. The term "configured to" does not necessarily imply "specifically designed to" in hardware. Alternatively, in some situations, the expression "device configured to perform a particular task" may indicate that the device, together with other devices or components, "is able to". For example, the phrase "processor adapted (or configured) to perform A, B, and C" may refer to a dedicated processor (e.g. embedded processor) only for performing the corresponding operations, or a generic-purpose processor (e.g., a central processing unit (CPU) or an application processor (AP)) that can perform the corresponding operations by executing one or more software programs stored in a memory device.

The terms used herein merely describe particular embodiments and are not intended to limit the scope of other embodiments. As used herein, singular forms may include plural forms as well unless the context clearly indicates otherwise. Unless defined otherwise, all terms used herein, including technical and scientific terms, have the same meaning as those commonly understood by a person skilled in the art to which the present disclosure pertains. Such terms as those defined in a generally used dictionary may be interpreted to have the same meanings as the contextual meanings in the relevant field of art, and are not to be interpreted to have ideal or excessively formal meanings unless clearly defined in the present disclosure. In some cases, terms defined herein should not be interpreted to exclude embodiments of the present disclosure.

An electronic device according to various embodiments of the present disclosure may include, for example, a smart phone, a tablet Personal Computer (PC), a mobile phone, a video phone, an electronic book reader (e-book reader), a desktop PC, a laptop PC, a netbook computer, a workstation, a server, a Personal Digital Assistant (PDA), a Portable Multimedia Player (PMP), a Motion Picture Experts' Group (MPEG)-l audio layer-3 (MP3) player, a mobile medical device, a camera, and a wearable device. The wearable device may include at least one of an accessory type of device (e.g., a watch, a ring, a bracelet, an anklet, a necklace, a glasses, a contact lens, or a Head-Mounted Device (HMD)), a fabric or clothing integrated type (e.g., an electronic clothing), a body-mounted type (e.g., a skin pad, or tattoo), and a bio-implantable type (e.g., an implantable circuit).

According to some embodiments of the present disclosure, the electronic device may be a home appliance. The home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, and an electronic photo frame.

According to another embodiment of the present disclosure, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR), a Flight Data Recorder (FDR), a Vehicle Infotainment Devices, an electronic devices for a ship (e.g., a navigation device for a ship, and a gyro-compass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.).

According to some embodiments of the present disclosure, the electronic device may include at least one of a part of furniture or a building/structure, an electronic board, an electronic signature receiving device, a projector, and various kinds of measuring instruments (e.g., a water meter, an electric meter, a gas meter, and a radio wave meter). An electronic device according to various embodiments of the present disclosure may be a combination of one or more of the aforementioned various devices. An electronic device according to some embodiments of the present disclosure may be a flexible device. Further, electronic devices according to an embodiment of the present disclosure are not limited to the aforementioned devices, and may include a new electronic device according to the development of new technology.

Hereinafter, electronic devices according to various embodiments of the present disclosure are described with reference to the accompanying drawings. As used herein, the term "user" may refer to a person who uses an electronic device or a device (e.g., an artificial intelligence electronic device) that uses an electronic device.

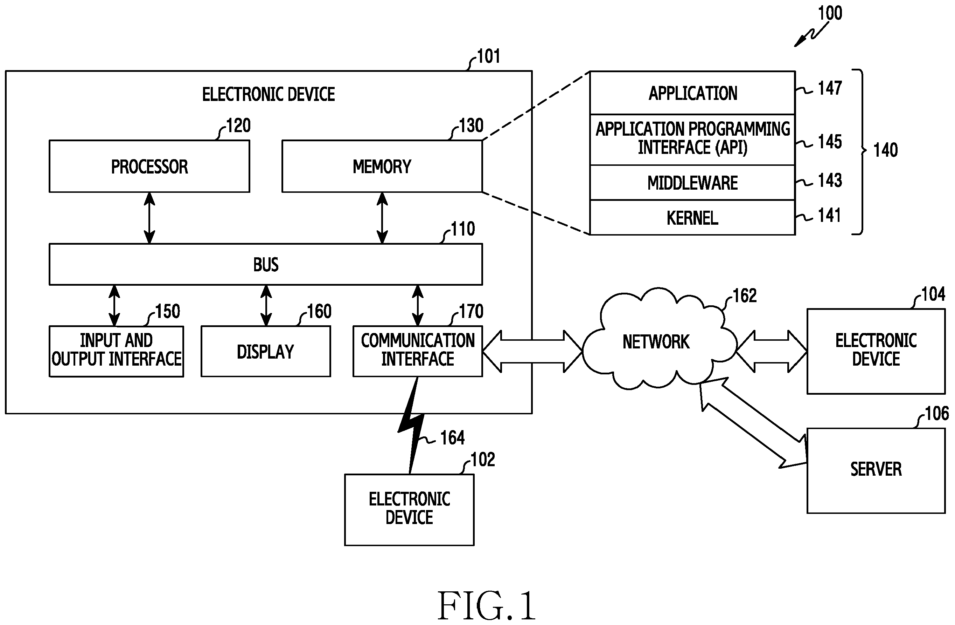

FIG. 1 is a diagram illustrating a network environment including an electronic device according to one exemplary an embodiment of the present invention.

Referring to FIG. 1, an electronic device 101 is included within a network environment 100. The electronic device 101 includes a bus 110, a processor 120, a memory 130, an input/output interface 150, a display 160, and a communication interface 170. In some embodiments, the electronic device 101 may omit one or more of the above elements and/or may further include other elements.

The bus 110 may include, for example, a circuit for connecting the elements 110 -170 to each other and transferring communication (e.g., control messages and/or data) between the elements.

The processor 120 may include one or more of a Central Processing Unit (CPU), an Application Processor (AP), and a Communication Processor (CP). The processor 120, for example, may carry out operations or data processing relating to control and/or communication of at least one other element of the electronic device 101.

The memory 130 may include a volatile memory and/or a non-volatile memory. The memory 130 may store, for example, instructions or data relevant to at least one other element of the electronic device 101. The memory 130 may store software and/or a program 140. The program 140 includes, for example, a kernel 141, middleware 143, an Application Programming Interface (API) 145, and/or application programs (i.e., "applications") 147. At least some of the kernel 141, the middleware 143, and the API 145 may be referred to as an Operating System (OS).

The kernel 141 may control or manage system resources (e.g., the bus 110, the processor 120, or the memory 130) used for performing operations or functions implemented by the other programs (e.g., the middleware 143, the API 145, or the application programs 147). Furthermore, the kernel 141 may provide an interface through which the middleware 143, the API 145, or the application programs 147 may access the individual elements of the electronic device 101 to control or manage the system resources.

The middleware 143, for example, may function as an intermediary for allowing the API 145 or the application programs 147 to communicate with the kernel 141 to exchange data.

In addition, the middleware 143 may process one or more task requests received from the application programs 147 according to priorities thereof. For example, the middleware 143 may assign priorities for using the system resources (e.g., the bus 110, the processor 120, the memory 130, or the like) of the electronic device 101, to at least one of the application programs 147. For example, the middleware 143 may perform scheduling or load balancing on the one or more task requests by processing the one or more task requests according to the priorities assigned thereto.

The API 145 is an interface through which the applications 147 control functions provided from the kernel 141 or the middleware 143, and may include, for example, at least one interface or function (e.g., instruction) for file control, window control, image processing, or text control.

The input/output interface 150, for example, may function as an interface that transfers instructions or data input from a user or another external device to the other element(s) of the electronic device 101. Furthermore, the input/output interface 150 may output the instructions or data received from the other element(s) of the electronic device 101 to the user or another external device.

The display 160 may include, for example, a Liquid Crystal Display (LCD), a Light Emitting Diode (LED) display, an Organic Light Emitting Diode (OLED) display, a Micro Electro Mechanical System (MEMS) display, or an electronic paper display. The display 160, for example, may display various types of content (e.g., text, images, videos, icons, or symbols) for the user. The display 160 may include a touch screen and receive, for example, a touch, gesture, proximity, or hovering input using an electronic pen or a part of the user's body, such as a finger.

The communication interface 170, for example, may set communication between the electronic device 101 and an external device (e.g., a first external electronic device 102, a second external electronic device 104, or a server 106). For example, the communication interface 170 may be connected to a network 162 through wireless or wired communication to communicate with the external device 104 or the server 106.

The wireless communication may use one or more of, for example, Long Term Evolution (LTE), LTE-Advance (LTE-A), Code Division Multiple Access (CDMA), Wideband CDMA (WCDMA), Universal Mobile Telecommunications System (UMTS), WiBro (Wireless Broadband), and Global System for Mobile Communications (GSM), as a cellular communication protocol. In addition, the wireless communication may include, for example, short range communication 164. The short-range communication 164 may be performed by using at least one of, for example, Wi-Fi, Bluetooth, Near Field Communication (NFC), and Global Navigation Satellite System (GNSS). The GNSS may include at least one of, for example, a Global Positioning System (GPS), a Global Navigation Satellite System (Glonass), a Beidou Navigation Satellite System (hereinafter referred to as "Beidou"), and a European Global Satellite-based Navigation System (Galileo), according to a use area, a bandwidth, or the like. Herein, the term "GPS" may be used interchangeably used with the term "GNSS". The wired communication may include at least one of, for example, a Universal Serial Bus (USB), a High Definition Multimedia Interface (HDMI), Recommended Standard 232 (RS-232), and a Plain Old Telephone Service (POTS). The network 162 may include at least one of a communication network, such as a computer network (e.g., a LAN or a WAN), the Internet, and a telephone network.

Each of the first and second external electronic apparatuses 102 and 104 may be of a same or different type than a type of the electronic apparatus 101. The server 106 may include a group of one or more servers. Some of the operations performed in the electronic device 101 may be performed in another electronic device or a plurality of electronic devices (e.g., the electronic devices 102 and 104 or the server 106). When the electronic device 101 has to perform some functions or services automatically or in response to a request, the electronic device 101 may make a request for performing at least some functions relating thereto to another electronic device 102 or 104 or the server 106 instead of performing the functions or services by itself or in addition. Another electronic apparatus may execute the requested functions or the additional functions, and may deliver a result of the execution to the electronic apparatus 101. The electronic device 101 may process the received result as it is or additionally to provide the requested functions or services. To achieve this, for example, cloud computing, distributed computing, or client-server computing technology may be used.

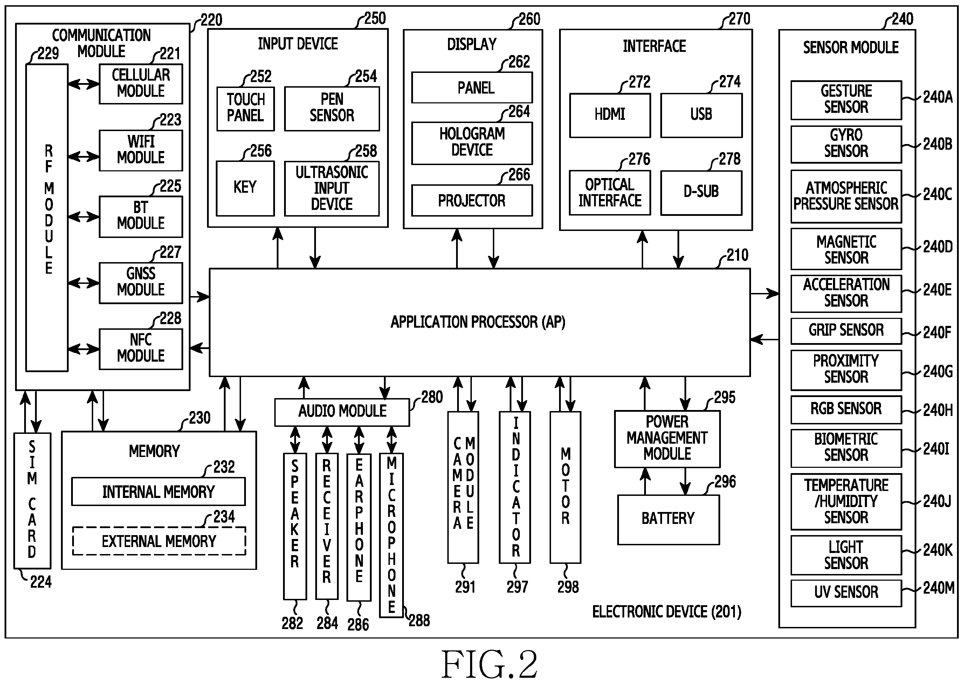

FIG. 2 is a block diagram illustrating an electronic device according to an embodiment of the present invention. For example, the electronic apparatus 201 may include the whole or part of the electronic apparatus 101 illustrated in FIG. 1. The electronic device 201 includes, for example, at least one processor (e.g., an AP) 210, a communication module 220, a Subscriber Identification Module (SIM) 224, a memory 230, a sensor module 240, an input device 250, a display 260, an interface 270, an audio module 280, a camera module 291, a power management module 295, a battery 296, an indicator 297, and a motor 298.

The processor 210 may control a plurality of hardware or software components connected to the processor 210 by driving an operating system or an application program and perform processing of various pieces of data and calculations. The processor 210 may be implemented by, for example, a System on Chip (SoC). According to an embodiment of the present disclosure, the processor 210 may further include a Graphic Processing Unit (GPU) and/or an image signal processor. The processor 210 may include at least some (e.g., a cellular module 221) of the other elements illustrated in FIG. 2. The processor 210 may load, into a volatile memory, instructions or data received from at least one (e.g., a non-volatile memory) of the other elements and may process the loaded instructions or data, and may store various data in a non-volatile memory.

The communication module 220 may have a configuration that is the same or similar to a configuration of the communication interface 170 of FIG. 1. The communication module 220 includes, for example, the cellular module 221, a Wi-Fi module 223, a Bluetooth (BT) module 225, a GNSS module 227 (e.g., a GPS module, a Glonass module, a Beidou module, or a Galileo module), an NFC module 228, and a Radio Frequency (RF) module 229.

The cellular module 221 may provide a voice call, image call, a text message service, or an Internet service through, for example, a communication network. The cellular module 221 may distinguish between and authenticate electronic devices 201 within a communication network using a subscriber identification module (for example, the SIM card 224). According to an embodiment of the present disclosure, the cellular module 221 may perform one or more of the functions provided by the processor. According to an embodiment of the present invention, the cellular module 221 may further include a Communication Processor (CP).

Each of the Wi-Fi module 223, the BT module 225, the GNSS module 227, and the NFC module 228 may include, for example, a processor for processing data transmitted and received through the relevant module. According to some embodiments of the present invention, some (e.g., two or more) of the cellular module 221, the Wi-Fi module 223, the BT module 225, the GNSS module 227, and the NFC module 228 may be included in one Integrated Chip (IC) or IC package.

The RF module 229 may transmit/receive, for example, a communication signal (for example, an RF signal). The RF module 229 may include, for example, a transceiver, a Power Amplifier Module (PAM), a frequency filter, a Low Noise Amplifier (LNA), and an antenna. According to another embodiment of the present disclosure, at least one of the cellular module 221, the Wi-Fi module 223, the BT module 225, the GNSS module 227, and the NFC module 228 may transmit and receive RF signals through a separate RF module.

The SIM 224 may include, for example, a SIM card and/or an embedded SIM, and may contain unique identification information (e.g., an Integrated Circuit Card Identifier (ICCID)) or subscriber information (e.g., an International Mobile Subscriber Identity (IMSI)).

The memory 230 (for example, the memory 130) includes, for example, at least one of an internal memory 232 and an external memory 234. The embedded memory 232 may include, for example, at least one of a volatile memory (for example, a Dynamic Random Access Memory (DRAM), a Static RAM (SRAM), a Synchronous Dynamic RAM (SDRAM), and the like) and a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a flash memory (for example, a NAND flash memory or a NOR flash memory), a hard disc drive, a Solid State Drive (SSD), and the like).

The external memory 234 may further include, for example, a flash drive, for example, a Compact Flash (CF), a Secure Digital (SD), a Micro Secure Digital (Micro-SD), a Mini Secure Digital (Mini-SD), an eXtreme Digital (xD), a memory stick, or the like. The external memory 234 may be functionally and/or physically connected to the electronic apparatus 201 through various interfaces.

The sensor module 240 may measure a physical quantity or detect an operation state of the electronic device 201, and may convert the measured or detected information into an electrical signal. The sensor module 240 includes, for example, a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (for example, a Red/Green/Blue (RGB) sensor), a bio-sensor 2401, a temperature/humidity sensor 240J, a light sensor 240K, and an Ultra Violet (UV) sensor 240M. Additionally or alternatively, the sensor module 240 may include, for example, an E-nose sensor, an ElectroMyoGraphy (EMG) sensor, an ElectroEncephaloGram (EEG) sensor, an ElectroCardioGram (ECG) sensor, an InfraRed (IR) sensor, an iris sensor, and/or a fingerprint sensor. The sensor module 240 may further include a control circuit for controlling one or more sensors included therein. The electronic apparatus 201 may further include a processor configured to control the sensor module 240 as a part of or separately from the processor 210, and may control the sensor module 240 while the processor 210 is in a sleep state.

The input device 250 includes, for example, a touch panel 252, a (digital) pen sensor 254, a key 256, and an ultrasonic input device 258. The touch panel 252 may use at least one of, for example, a capacitive type, a resistive type, an infrared type, and an ultrasonic type touch panel. The touch panel 252 may further include a control circuit. The touch panel 252 may further include a tactile layer that provides a tactile reaction to the user.

The (digital) pen sensor 254 may include, for example, a recognition sheet which is a part of the touch panel or is separated from the touch panel. The key 256 may include, for example, a physical button, an optical key or a keypad. The ultrasonic input device 258 may detect ultrasonic wavers generated by an input tool through a microphone 288 and identify data corresponding to the detected ultrasonic waves.

The display 260 (for example, the display 160) includes, for example, a panel 262, a hologram device 264 and a projector 266. The panel 262 may be configured in a same or similar manner as the display 160 illustrated in FIG. 1. The panel 262 may be implemented to be, for example, flexible, transparent, or wearable. The panel 262 and the touch panel 252 may be implemented as one module. The hologram 264 may show a three dimensional image in the air by using an interference of light. The projector 266 may display an image by projecting light onto a screen. The screen may be located, for example, inside or outside the electronic apparatus 201. According to an embodiment of the present invention, the display 260 may further include a control circuit for controlling the panel 262, the hologram device 264, or the projector 266.

The interface 270 includes, for example, a High-Definition Multimedia Interface (HDMI) 272, a Universal Serial Bus (USB) 274, an optical interface 276, and a D-subminiature (D-sub) 278. The interface 270 may be included in, for example, the communication interface 170 illustrated in FIG. 1. Additionally or alternatively, the interface 270 may include, for example, a Mobile High-definition Link (MHL) interface, a Secure Digital (SD) card/Multi-Media Card (MMC) interface, or an Infrared Data Association (IrDA) standard interface.

The audio module 280 may bilaterally convert, for example, a sound and an electrical signal. Some or all of elements of the audio module 280 may be included in, for example, the input/output interface 145 illustrated in FIG. 1. The audio module 280 may process sound information that is input or output through, for example, a speaker 282, a receiver 284, earphones 286, the microphone 288, and the like.

The camera module 291 is a device that may photograph a still image and a dynamic image. The camera module 291 may include one or more image sensors (for example, a front sensor or a back sensor), a lens, an Image Signal Processor (ISP) or a flash (for example, LED or xenon lamp).

The power management module 295 may manage, for example, power of the electronic device 201. According to an embodiment of the present invention, the power management module 295 may include a Power Management Integrated Circuit (PMIC), a charger Integrated Circuit (IC), or a battery gauge. The PMIC may use a wired and/or wireless charging method. Examples of the wireless charging method may include, for example, a magnetic resonance method, a magnetic induction method, an electromagnetic method, and the like. Additional circuits (e.g., a coil loop, a resonance circuit, a rectifier, etc.) for wireless charging may be further included. The battery gauge may measure, for example, a residual quantity of the battery 296, and a voltage, a current, or a temperature during the charging. The battery 296 may include, for example, a rechargeable battery or a solar battery.

The indicator 297 may display a particular state (e.g., a booting state, a message state, a charging state, or the like) of the electronic apparatus 201 or a part (e.g., the processor 210). The motor 298 may convert an electrical signal into mechanical vibration, and may generate vibration, a haptic effect, or the like. The electronic apparatus 201 may include a processing unit (e.g., a GPU) for supporting a mobile television (TV). The processing unit for supporting mobile TV may, for example, process media data according to a certain standard such as Digital Multimedia Broadcasting (DMB), Digital Video Broadcasting (DVB), or MediaFlow™.

Each of the above-described component elements of hardware, according to the present disclosure, may be configured with one or more components, and the names of the corresponding component elements may vary based on the type of electronic device. An electronic device according to various embodiments of the present disclosure may include one or more of the aforementioned elements. Some elements may be omitted or other additional elements may be further included in the electronic device. Some of the hardware components may be combined into one entity, which may perform functions identical to those of the relevant components before the combination.

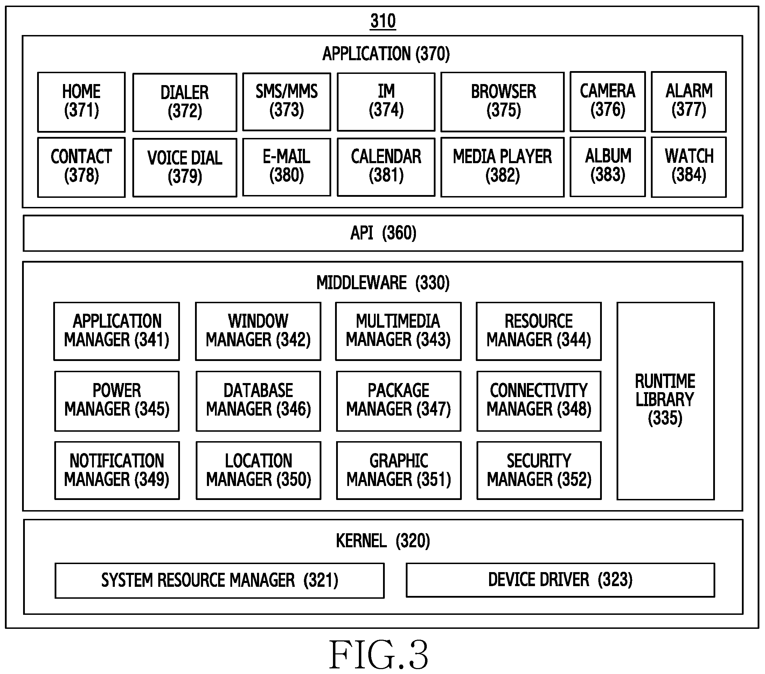

FIG. 3 is a block diagram illustrating a program module according to an embodiment of the present invention. According to an embodiment, a program module 310 (for example, the program 140) may include an Operating System (OS) for controlling resources related to the electronic device 101 and/or various applications 147 executed in the operating system.

The program module 310 includes a kernel 320, middleware 330, an API 360, and/or an application 370. At least some of the program module 310 may be preloaded on the electronic apparatus, or may be downloaded from the external electronic apparatus 102 or 104, or the server 106.

The kernel 320 (e.g., the kernel 141) includes, for example, a system resource manager 321 and/or a device driver 323. The system resource manager 321 may perform the control, allocation, retrieval, or the like of system resources. According to an embodiment of the present disclosure, the system resource manager 321 may include a process manager, a memory manager, a file system manager, or the like. The device driver 323 may include, for example, a display driver, a camera driver, a Bluetooth driver, a shared memory driver, a USB driver, a keypad driver, a Wi-Fi driver, an audio driver, or an Inter-Process Communication (IPC) driver.

The middleware 330 may provide a function required by the applications 370 in common or provide various functions to the applications 370 through the API 360, so that the applications 370 can efficiently use limited system resources within the electronic device. The middleware 330 (for example, the middleware 143) includes, for example, at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include a library module that a compiler uses in order to add a new function through a programming language while the applications 370 are being executed. The runtime library 335 may perform input/output management, memory management, the functionality for an arithmetic function, and the like.

The application manager 341 may manage, for example, the life cycle of at least one of the applications 370. The window manager 342 may manage Graphical User Interface (GUI) resources used for the screen. The multimedia manager 343 may determine a format required to reproduce various media files, and may encode or decode a media file by using a COder/DECoder (CODEC) appropriate for the relevant format. The resource manager 344 may manage resources, such as a source code, a memory, a storage space, and the like of at least one of the applications 370.

The power manager 345 may operate together with a Basic Input/Output System (BIOS) to manage a battery or power and may provide power information required for the operation of the electronic device. The database manager 346 may generate, search for, and/or change a database to be used by at least one of the applications 370. The package manager 347 may manage the installation or update of an application distributed in the form of a package file.

The connectivity manager 348 may manage a wireless connection such as, for example, Wi-Fi or Bluetooth. The notification manager 349 may display or notify of an event, such as an arrival message, an appointment, a proximity notification, and the like, in such a manner as not to disturb the user. The location manager 350 may manage location information of the electronic apparatus. The graphic manager 351 may manage a graphic effect, which is to be provided to the user, or a user interface related to the graphic effect. The security manager 352 may provide various security functions required for system security, user authentication, and the like. According to an embodiment of the present disclosure, when the electronic apparatus (e.g., the electronic apparatus 101) has a telephone call function, the middleware 330 may further include a telephony manager for managing a voice call function or a video call function of the electronic apparatus.

The middleware 330 may include a middleware module that forms a combination of various functions of the above-described elements. The middleware 330 may provide a module specialized for each type of OS in order to provide a differentiated function. The middleware 330 may also dynamically delete some of the existing elements, or may add new elements.

The API 360 (e.g., the API 145) is, for example, a set of API programming functions, and may be provided with different configurations according to an OS. For example, one API set may be provided for each platform, or two or more API sets may be provided for each platform.

The applications 370 (for example, the application program 147) include, for example, one or more applications that can provide functions such as home 371, dialer 372, SMS/MMS 373, Instant Message (IM) 374, browser 375, camera 376, alarm 377, contacts 378, voice dialer 379, email 380, calendar 381, media player 382, album 383, clock 384, health care (for example, measuring exercise quantity or a blood sugar level), or environment information (for example, atmospheric pressure, humidity, or temperature information).

According to an embodiment of the present disclosure, the applications 370 may include an application (hereinafter, an "information exchange application") supporting information exchange between the electronic apparatus 101 and the external electronic apparatus 102 or 104. The application associated with information exchange may include, for example, a notification relay application for forwarding specific information to an external electronic device, or a device management application for managing an external electronic device.

For example, the notification relay application may include a function of delivering, to the external electronic apparatus 102 or 104, notification information generated by other applications (e.g., an SMS/MMS application, an email application, a health care application, an environmental information application, etc.) of the electronic apparatus 101. Further, the notification relay application may receive notification information from, for example, an external electronic device and provide the received notification information to a user.

The device management application may manage (for example, install, delete, or update), for example, a function for at least a part of the external electronic device 102 or 104 communicating with the electronic device (for example, turning on/off the external electronic device itself (or some elements thereof) or adjusting brightness (or resolution) of a display), applications executed in the external electronic device, or services provided from the external electronic device (for example, a telephone call service or a message service).

The applications 370 may include applications (for example, a health care application of a mobile medical appliance and the like) designated according to attributes of the external electronic device 102 or 104. The application 370 may include an application received from the external electronic apparatus 102 or 104, or the server 106. The application 370 may include a preloaded application or a third party application that can be downloaded from the server. Names of the elements of the program module 310, according to the above-described embodiments of the present disclosure, may change depending on the type of OS.

According to various embodiments of the present disclosure, at least some of the program module 310 may be implemented in software, firmware, hardware, or a combination of two or more thereof. At least some of the program module 310 may be implemented (e.g., executed) by, for example, the processor (e.g., the processor 210). At least some of the program module 310 may include, for example, a module, a program, a routine, a set of instructions, and/or a process for performing one or more functions.

The term "module" as used herein may, for example, refer to a unit including one of hardware, software, and firmware or a combination of two or more of them. The term "module" may be interchangeably used with, for example, the term "unit", "logic", "logical block", "component", or "circuit". The term "module" may refer to a minimum unit of an integrated component element or a part thereof. The term "module" may refer to a minimum unit for performing one or more functions or a part thereof. The "module" may be mechanically or electronically implemented. For example, the "module" may include at least one of an Application-Specific Integrated Circuit (ASIC) chip, a Field-Programmable Gate Arrays (FPGA), and a programmable-logic device for performing operations that have been known, or are to be developed hereinafter.

According to various embodiments of the present disclosure, at least some of the devices (for example, modules or functions thereof) or the method (for example, operations) may be implemented by a command stored in a computer-readable storage medium in a programming module form. The command, when executed by the processor 120, may cause the one or more processors to execute the function corresponding to the instruction. The computer-readable storage medium may be, for example, the memory 130.

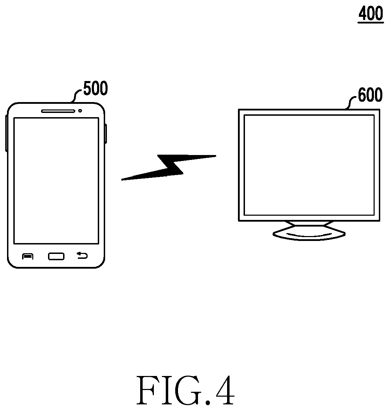

FIG. 4 is a diagram illustrating a system for providing a screen mirroring service according to an embodiment of the present invention.

Referring to FIG. 4, a system 400 for providing the screen mirroring service according to an embodiment of the present disclosure may include an electronic device 500 and at least one external device 600.

The electronic device 500 (e.g., the electronic device 101) and the external device 600 (e.g., the electronic device 102 or the electronic device 104) may be connected via a wireless communication scheme or a wired communication scheme. The electronic device 500 and the external device 600 may, for example, use a communication scheme such as Miracast, etc. The electronic device 500 and the external device 600 may use the same control channel. When using the Miracast communication scheme, the control channel may be a User Input Back Channel (UIBC). The electronic device 500 may connect screen mirroring with at least one external device 600. During the screen mirroring connection process, the electronic device 500 may perform negotiation with the external device 600. The electronic device 500 may check resolution information supportable in the electronic device 500 and resolution information supportable in the external device 600 and determine a resolution commonly supportable in the both devices. The electronic device 500 may receive identification information of the external device 600 during negotiation with the external device 600.

The external device 600 may display screen data (e.g., image frame data) transmitted periodically or in real-time from the electronic device 500. The external device 600 may transmit a control signal dependent on an input generated by a user, to the electronic device 500.

If there is a request for execution of screen mirroring at the time of execution of at least one function, for instance, an application (e.g., an application program), the electronic device 500 may generate a plurality of screen data. A user may set, in the application, whether to display screen data of screen mirroring execution in a first operation mode (i.e., a presentation mode) or whether to display the screen data in a second operation mode (i.e., a clone mode). If the application is set to display the screen data in the first operation mode, different screen data may be displayed on the electronic device 500 and the external device 600. If the application is set to display the screen data in the second operation mode, the same screen data may be displayed on the electronic device 500 and the external device 600. The electronic device 500 may transmit the screen data to the external device 600 based on a resolution that is determined during the screen mirroring connection process.

If the electronic device 500 is connected to one external device 600, the electronic device 500 may transmit any one screen data among a plurality of screen data to the external device 600, and display another one screen data, from among the plurality of screen data, on a screen of the electronic device 500. If the electronic device 500 is connected to a plurality of external devices 600, the electronic device 500 may transmit a plurality of screen data to the plurality of external devices 600, respectively, and display one screen data on the screen of the electronic device 500.

If a control signal is received from the external device 600, the electronic device 500 may check identification information of the external device 600 having transmitted the control signal. The electronic device 500 may check screen data that is being transmitted to the external device 600 based on the identification information of the external device 600. The electronic device 500 may check an operation mode corresponding to the screen data that is being transmitted. The electronic device 500 may control the screen data that is being transmitted according to the checked operation mode, and transmit the screen data to the external device 600.

If a control signal is received from the external device 600 in a state in which the electronic device 500 is set to display in a first operation mode in an application, the electronic device 500 may control the screen data that is being transmitted to the external device 600 according to the control signal. For example, the electronic device 500 may adaptively transmit the screen data to the external device 600 to the determined resolution, and adaptively display the screen data at the determined resolution. If a control signal is generated from the external device 600, the electronic device 500 may provide a coordinate included in the control signal to the application providing the screen data. The electronic device 500 may provide a coordinate to the application to enable the application itself to perform a function corresponding to a position in which the control signal is generated.

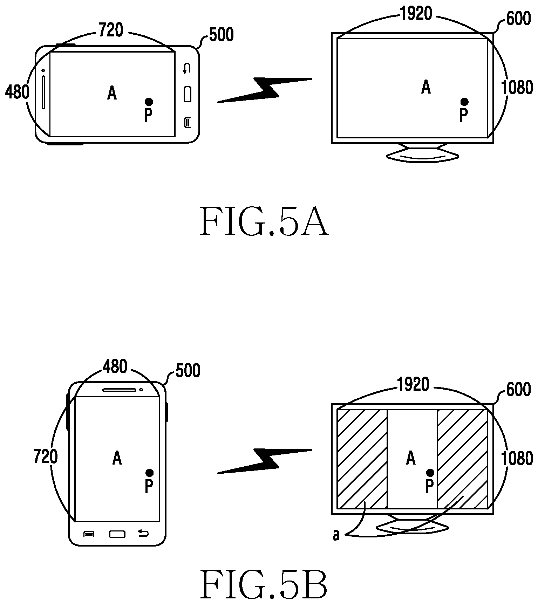

If a control signal is received from the external device 600 in a state in which the electronic device 500 is set to display in the second operation mode in the application, the electronic device 500 may control the screen data which is being transmitted to the external device 600 according to the control signal. The electronic device 500 may check if there is a need to transform the coordinate included in the control signal. An operation of transforming the coordinate included in the control signal generated in the external device 600 is described in more detail with reference to FIG. 5.

FIGs. 5A and 5B are diagrams illustrating a method of transforming a coordinate of a control signal generated in an external device according to an embodiment of the present invention.

FIG. 5A shows a state in which the electronic device 500 having a resolution of 480 x 720 pixels and being in a landscape state, and the external device 600 having a resolution of 1920 x 1080 pixels are connected by screen mirroring. For example, a resolution determined through negotiation at a time the electronic device 500 performs screen mirroring with the external device 600 may be 1280 x 720 pixels. As in FIG. 5A, since a resolution of the electronic device 500 and a resolution of the external device 600 are different from each other, the external device 600 may transform a coordinate of a position in which a control signal is generated in the external device 600. If a control signal is generated in a 'P' position (x, y) in the external device 600, the external device 600 may transform the coordinate (x, y) of the 'P' position. The external device 600 may transmit the transformed coordinate ((x/1920)*1280, (y/1080)*720) of the 'P' position to the electronic device 500. The electronic device 500 may transform the coordinate received from the external device 600 into 480 x 720 pixels which is the resolution of the electronic device 500. The electronic device 500 may perform a function corresponding to the coordinate transformed adaptively to the resolution of the electronic device 500. The electronic device 500 may display second screen data varying according to the function execution and transmit the second screen data to the external device 600.

FIG. 5B shows a state in which the electronic device 500 having a resolution of 480 x 720 pixels and being in a portrait state and the external device 600 having a resolution of 1920 x 1080 pixels are connected by screen mirroring. For example, a resolution determined through negotiation at a time the electronic device 500 performs screen mirroring with the external device 600 may be 1920 x 1080 pixels. The electronic device 500 may generate screen data intended to be transmitted to the external device 600, transformed adaptively to the determined resolution. For example, the electronic device 500 may change the screen data corresponding to 480 x 720, adaptively to 1920 x 1080 pixels. Since a height of the resolution of the electronic device 500 is equal to 720 pixels, and a height of the determined resolution is equal to 1080 pixels, a height of the screen data may be transformed based on the Equation 720 pixels x 1.5=1080 pixels, and a width of the screen data may be transformed based on the Equation 480 pixels x 1.5 = 720 pixels. Since the transformed screen data should be located in the center of the determined resolution, the electronic device 500 may calculate widths of 'a' areas of the external electronic device 600 that do not include the transformed screen data. The electronic device 500 may calculate that the widths of the 'a' areas of the external device 600 are each equal to 600 pixels, using the Equation (the width (1920 pixels) of the determined resolution - the transformed width (720 pixels) of the screen data) / 2).

If a control signal is generated in a 'P' position (x, y) in the external device 600, the external device 600 may transmit a coordinate (x, y) of the P position to the electronic device 500. The electronic device 500 may transform the coordinate (x, y) into 720 x 480 pixels, which is the resolution of the electronic device 500. If a control signal is generated in the 'a' area of the external device 600, the electronic device 500 may determine that a coordinate at which the control signal is generated is not an effective coordinate included in the display unit 517 of the electronic device 500. According to this determination, electronic device 500 may not process the control signal.

The electronic device 500 may perform a function corresponding to a coordinate transformed adaptively to the resolution of the electronic device 500. The electronic device 500 may display second screen data varying according to the function execution and transmit the second screen data to the external device 600.

The electronic device 500 may be an electronic device including a wearable device, etc. such as a smart phone, a tablet, a smart watch, etc., and the external device 600 may be an electronic device such as a smart phone, a tablet, a television, and a monitor, etc. communicable with the electronic device 500. If the external device 600 is not able to directly communicate with the electronic device 500, the external device 600 may connect with another external device, for example, a dongle, etc. that is able to perform communication with each of the electronic device 500 and the electronic device 500.

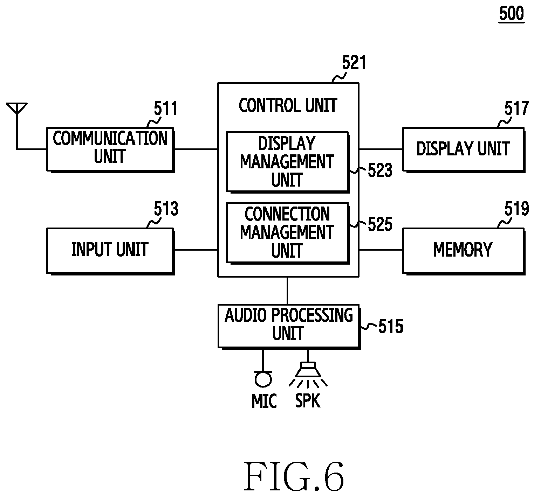

FIG. 6 is a block diagram illustrating a key construction of an electronic device providing a screen mirroring service according to an embodiment of the present invention.

Referring to FIG. 6, the electronic device 500 according to an embodiment of the present invention includes a communication unit 511, an input unit 513, an audio processing unit 515, a display unit 517, a memory 519, and a control unit 521.

The communication unit 511 (e.g., the communication interface 170) performs communication functions of the electronic device 500. The communication unit 511 may communicate with at least one external device 600 according to various communication schemes. The communication unit 511 may perform wireless communication and/or wired communication. The communication unit 511 may access at least any one among a mobile communication network or a data communication network. The communication unit 511 may perform short-range communication. For example, the external device 600 may include an electronic device, a base station, a server, and an artificial satellite. The communication scheme may include, for example, Miracast, Long Term Evolution (LTE), Wideband Code Division Multiple Access (WCDMA), Global System for Mobile Communications (GSM), Wireless Fidelity (WiFi), Bluetooth, and Near Field Communication (NFC).

The input unit 513 (e.g., the input/output interface 150) may generate input data in response to an input of a user of the electronic device 500. The input unit 513 may include at least one input means. This input unit 513 may include, for example, a key pad, a dome switch, a button, a touch panel, and/or a jog shuttle, etc. The input unit 513 may provide the generated input data to the control unit 521.

The audio processing unit 515 may process an audio signal. The audio processing unit 515 includes a SPeaKer (SPK) and a MICrophone (MIC). The audio processing unit 515 may play, through the speaker, an audio signal output from the control unit 521. The audio processing unit 515 may forward an audio signal generated in the microphone to the control unit 521.

The display unit 517 (e.g., the display 160) may display screen data according to an operation of the electronic device 500. This display unit 517 may include, for example, a Liquid Crystal Display (LCD) display, a Light Emitting Diode (LED) display, an Organic LED (OLED) display, a Micro Electro Mechanical Systems (MEMS) display, and/or an electronic paper display. The display 517 may include a plurality of light emitting elements. The display unit 517 may be combined with the input unit 513, and the resulting combination may be implemented as a touch screen.

The memory 519 (e.g., the memory 130) may store operation programs of the electronic device 500. The memory 519 may store identification information of at least one external device 600 performing screen mirroring with the electronic device 500.

The control unit 521 (e.g., the processor 120) may generate a plurality of screen data, and transmit any one of the plurality of screen data to the external device 600. The control unit 521 may control the screen data which is being transmitted to the external device 600 according to a control signal received from the external device 600.

The control unit 521 may transmit the plurality of screen data to a plurality of external devices 600, respectively, and may receive a control signal from at least one external device 600 among the external devices 600. The control unit 521 may check screen data that is being transmitted to at least one external device 600 and control the screen data according to the control signal. In order to check and control the screen data, the control unit 521 includes a display management unit 523 and a connection management unit 525.

The display management unit 523 may display screen data dependent on execution of at least one application on the display unit 517.

The connection management unit 525 may connect screen mirroring with at least one external device 600. If a screen mirroring execution signal for connecting the screen mirroring with the external device 600 is received from the input unit 513, the connection management unit 525 may search at least one external device 600 possible to perform the screen mirroring with the electronic device 500. The connection management unit 525 may display a list of the searched at least one external device 600 on the display unit 517. If a selection signal for the external device 600 being on the list is received from the input unit 513, the connection management unit 525 may connect the screen mirroring with the selected external device 600.

The connection management unit 525 may perform negotiation with the external device 600 at the time of performing the screen mirroring connection with the external device 600. The connection management unit 525 may check information regarding resolutions supported by the electronic device 500 and information regarding resolutions supported by the external device 600 and determine a resolution commonly supported by both devices. During screen mirroring connection with the external device 600, the connection management unit 525 may send a control channel check request to the external device 600 so as to check whether the external device 600 can use a control channel. If the external device 600 is able to use the control channel, the electronic device 500 may receive a message about this capability from the external device 600. The control channel is a channel for transmitting, by the external device 600, a control signal capable of controlling the electronic device 500. The control channel may be a UIBC when the electronic device 500 and the external device 600 use a Miracast communication scheme. The connection management unit 525 may receive identification information of the external device 600 at the time of screen mirroring connection with the external device 600.

If a screen mirroring end signal is received from the input unit 513, or if a screen mirroring end signal is received from the external device 600 through the control channel, the connection management unit 525 may end screen mirroring that is being performed with the external device 600.

According to an embodiment of the present disclosure, during application execution, if screen mirroring execution with one external device 600 is requested, the display management unit 523 may generate a plurality of screen data. If the display management unit 523 is set to display in a first operation mode in an application, the display management unit 523 may transmit first screen data (e.g., first image frame data) to the external device 600 through the connection management unit 525. The display management unit 523 may display second screen data (e.g., second image frame data) on the display unit 517. The first screen data and the second screen data may be screen data for different applications. Alternatively, the first screen data and the second screen data may be different screen data for the same application.

If a control signal is received from the external device 600, the display management unit 523 may check identification information of the external device 600. The electronic device 500 may check screen data which is being transmitted to the external device 600 based on the identification information. Since the screen data that is being transmitted to the external device 600 is the first screen data, the display management unit 523 may check whether the screen data has been set to display in the first operation mode in the application.

The display management unit 523 may control the first screen data according to the received control signal. The display management unit 523 may transmit the controlled first screen data to the external device 600 through the connection management unit 525. For example, by providing a corresponding application with a coordinate corresponding to the control signal generated in the external device 600, the display management unit 523 may perform a function corresponding to a position in which the control signal is generated in the application itself.

At application execution, if there is a request for screen mirroring execution with a plurality of external devices 600, the display management unit 523 may generate a plurality of screen data. If the display management unit 523 is set to display in a first operation mode in a first application, the display management unit 523 may transmit first screen data to a first external device 600a through the connection management unit 525. If the display management unit 523 is set to display in the first operation mode in a second application, the display management unit 523 may transmit second screen data to a second external device 600b through the connection management unit 525. The display management unit 523 may display third screen data different from the first screen data and the second screen data on the display unit 517.

If a control signal is received from the first external device 600a, the display management unit 523 may check identification information of the first external device 600a. The electronic device 500 may check screen data that is being transmitted to the first external device 600a based on the identification information. Since the screen data that is being transmitted to the first external device 600a is the first screen data, the display management unit 523 may check whether the display management unit 523 has been set to display in the first operation mode in the first application.

The display management unit 523 may control the first screen data according to the received control signal. The display management unit 523 may transmit the controlled first screen data to the first external device 600a through the connection management unit 525.

If a control signal is received from the second external device 600b, the display management unit 523 may check identification information of the second external device 600b. The electronic device 500 may check screen data that is being transmitted to the second external device 600b based on the identification information. Since the screen data that is being transmitted to the second external device 600b is the second screen data, the display management unit 523 may check whether the display management unit 523has been set to display in the first operation mode in the second application.

The display management unit 523 may control the second screen data according to the received control signal. The display management unit 523 may transmit the controlled second screen data to the second external device 600b through the connection management unit 525.

According to an embodiment of the present invention, at application execution, if there is a request for screen mirroring execution with the plurality of external devices 600, the display management unit 523 may generate the plurality of screen data. If the display management unit 523is set to display in a first operation mode in a first application, the display management unit 523 may transmit first screen data to a first external device 600a through the connection management unit 525. If the display management unit 523 is set to display in a second operation mode in a second application, the display management unit 523 may transmit second screen data to a second external device 600b through the connection management unit 525, and display the second screen data on the display unit 517.

If a control signal is received from the second external device 600a, the display management unit 523 may check identification information of the second external device 600b. The electronic device 500 may check screen data that is being transmitted to the second external device 600b based on the identification information. Since the screen data that is being transmitted to the second external device 600b is the same second screen data as the second screen data displayed on the display unit 517, the display management unit 523 may check whether the display management unit 523 has been set to display in the second operation mode in the second application.

The display management unit 523 may control the second screen data according to the received control signal. The display management unit 523 may transmit the controlled second screen data to the second external device 600b through the connection management unit 525. The display management unit 523 may check whether there is a need for transformation of a coordinate included in the control signal. For example, when the electronic device 500 and the second external device 600b have different resolutions, the display management unit 523 may check whether there is a need for the transformation of the coordinates. When the electronic device 500 is in a portrait state, the display management unit 523 may check whether there is a need for the transformation of the coordinates.

According to an embodiment of the present disclosure, the electronic device 500 may include a communication unit 511 connecting with an external device 600, and a control unit 521 for generating a plurality of screen data, transmitting one of the plurality of screen data to the external device 600, and controlling the screen data being transmitted to the external device according to a control signal received from the external device 600.

The electronic device 500 may further include a display unit 517 displaying another one of the plurality of screen data.

The plurality of screen data are screen data each corresponding to different respective functions executed by the electronic device 500.

The plurality of screen data are different screen data each corresponding to execution of a same function in the electronic device 500.

The plurality of screen data comprise a first screen data and a second screen data.

The first screen data and the second screen data have different resolutions.

The first screen data has image pixel coordinates of a first range, and the second screen data has image pixel coordinates of a second range, and at least a part of the image pixel coordinates of the second range is the same as at least a part of the image pixel coordinates of the first range.

The first screen data is related to a first application program, and the second screen data is related to a second application program.

The first screen data is related to a first operation of a first application program, and the second screen data is related a second operation of the first application program.

The first screen data comprises media data provided through a first application program, and the second image frame data comprises a user interface of the first application program.

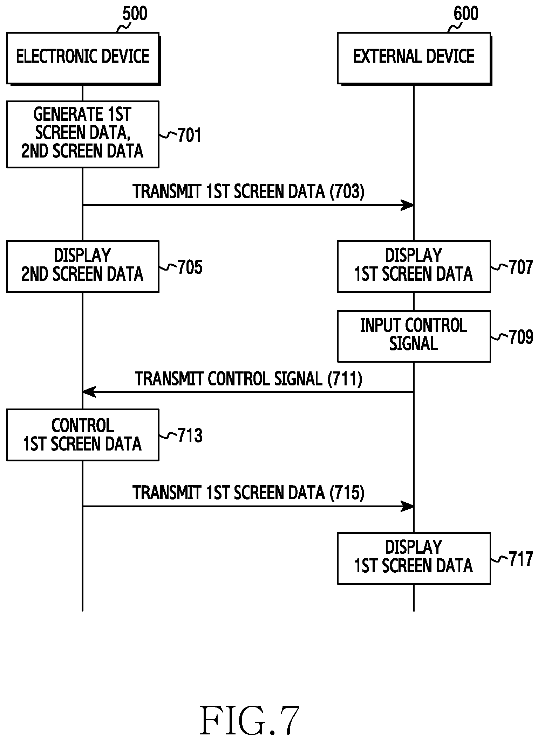

FIG. 7 is a ladder diagram illustrating a flow of data in providing a screen mirroring service according to an embodiment of the present invention.

Referring to FIG. 7, in step 701, if the electronic device 500 is set to display screen data in a first operation mode in a specific function, for example, an application, the electronic device 500 generates first screen data and second screen data. In step 703, the electronic device 500 transmits the first screen data to an external device 600 with which the electronic device 500 is connected to for screen mirroring. While performing the screen mirroring connection, the electronic device 500 may check resolution information supportable in the electronic device 500 and resolution information supportable in the external device 600. The electronic device 500 may determine a resolution commonly supportable in the both devices. While performing the screen mirroring connection, the electronic device 500 may send a control channel check request to the external device 600 so as to check whether the external device 600 can use a control channel. If the external device 600 is able to use the control channel, the electronic device 500 may receive a message indicating this capability from the external device 600. The control channel is a channel used by the external device 600 to control the electronic device 500. The control channel may be a UIBC when the electronic device 500 and the external device 600 use a Miracast communication scheme. The electronic device 500 may receive identification information of the external device 600 while performing a screen mirroring connection with the external device 600.

In step 705, the electronic device 500 displays the second screen data. For example, the first screen data and the second screen data may be respective screen data according to different function execution. The first screen data is screen data according to a function performed in a background of the electronic device 500, and the second screen data is screen data according to a function performed in a foreground of the electronic device 500. The first screen data and the second screen data are different from each other according to execution of one function. The first screen data may be screen data controlled by the second screen data.

In step 707, the external device 600 displays the first screen data received from the electronic device 500. In step 709, the external device 600 receives an input of a control signal from a user. In step 711, the external device 600 transmits the input control signal to the electronic device 500. In step 713, the electronic device 500 controls the first screen data according to the control signal received from the external device 600.

In step 715, the electronic device 500 transmits the controlled first screen data to the external device 600. In step 717, the external device 600 displays the received first screen data.

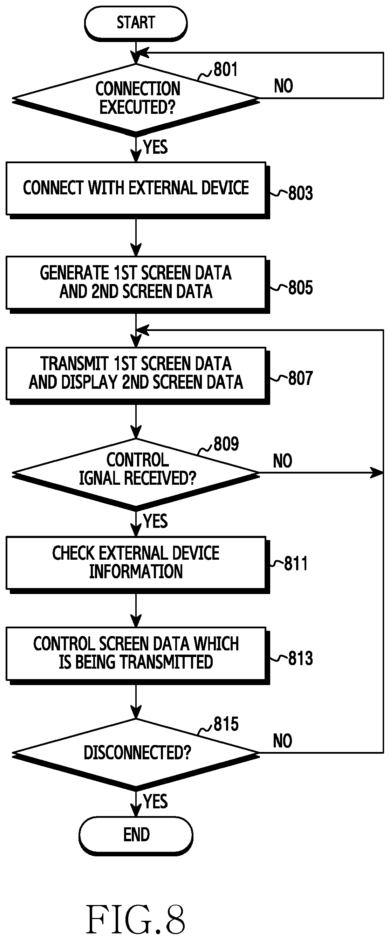

FIG. 8 is a flowchart illustrating a method of performing a screen mirroring service with an external device in an electronic device according to an embodiment of the present invention.

Referring to FIG. 8, if a signal for executing screen mirroring is input from a user in step 801, the electronic device 500 performs step 803, described herein below. If the signal for executing the screen mirroring is not input from the user in step 801, the electronic device 500 waits for an input of a screen mirroring execution signal.

In step 803, the electronic device 500 connects with the external device 600 to perform screen mirroring. While performing the screen mirroring connection, the electronic device 500 may check information regarding resolutions supported by the electronic device 500 and information regarding resolutions supported by the external device 600. The electronic device 500 may determine a resolution commonly supported by both devices. While performing the screen mirroring connection, the electronic device 500 may send a control channel check request to the external device 600 so as to check whether the external device 600 can use a control channel. If the external device 600 is able to use the control channel, the electronic device 500 may receive a message indicating this capability from the external device 600.

In step 805, the electronic device 500 generates the first screen data and the second screen data. In step 807, the electronic device 500 transmits the first screen data to the external device 600, and displays the second screen data on the display unit 517.

If a control signal is received from the external device 600 in step 809, the electronic device 500 performs step 811 and, if the control signal is not received, the electronic device 500 returns to step 807. In step 811, the electronic device 500 checks identification information of the external device 600, which has transmitted the control signal. In step 813, the electronic device 500 controls the first screen data that is being transmitted to the external device 600 based on the control signal. For example, the electronic device 500 may determine that the screen data that is being transmitted to the external device 600 is the first screen data according to the identification information. The electronic device 500 may control the first screen data that is being transmitted to the external device 600 according to the control signal.

If a screen mirroring disconnection signal is received in step 815, the electronic device 500 ends the execution of screen mirroring. If the screen mirroring disconnection signal is not received in step 815, the electronic device 500 returns to step 807.

According to an embodiment of the present disclosure, a method for providing a screen mirroring service in an electronic device 500 may include connecting with an external device 600, generating a plurality of screen data, transmitting any one of the plurality of screen data to the external device 600, and controlling the screen data being transmitted to the external device according to a control signal received from the external device 600.

The method may further include displaying the another one of the plurality of screen data.

The plurality of screen data are screen data each corresponding to different respective functions executed by the electronic device 500.

The plurality of screen data are different screen data each corresponding to execution of a same function in the electronic device 500.

The plurality of screen data comprise a first screen data and a second screen data.

The first screen data and the second screen data have different resolutions.

The first screen data has image pixel coordinates of a first range, and the second screen data has image pixel coordinates of a second range, and at least a part of the image pixel coordinates of the second range is the same as at least a part of the image pixel coordinates of the first range.

The first screen data are related to a first application program, and the second screen data are related to a second application program.

The first screen data are related to a first operation of a first application program, and the second screen data are related a second operation of the first application program.

The first screen data comprises media data provided through a first application program, and the second screen data comprises a user interface of the first application program.

According to an embodiment of the present disclosure, a computer-readable storage a program which conducts a method comprising connecting to an external device 600, generating a plurality of screen data, transmitting one of the plurality of screen data to the external device 600, and controlling the screen data being transmitted to the external device according to a control signal received from the external device 600.

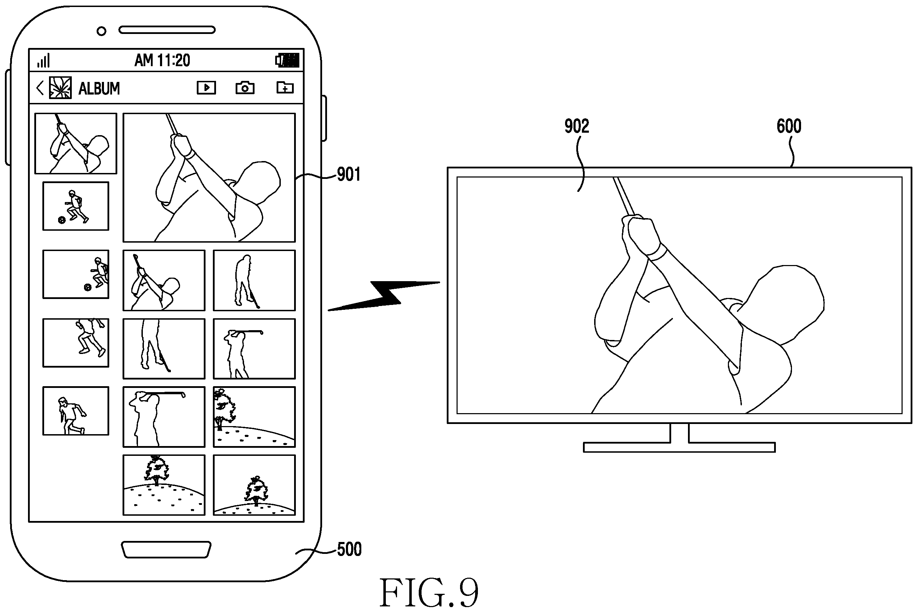

FIG. 9 is a diagram of an example screen according to a method of providing a screen mirroring service in an electronic device and an external device according to an embodiment of the present invention.

Referring to FIG. 9, the electronic device 500 may generate first screen data 902 and second screen data 901, and transmit the first screen data 902 to the external device 600. The electronic device 500 may display the second screen data 901.

For example, when a user executes an application related to video viewing, the electronic device 500 may set to display screen data in a first operation mode in the application. The electronic device 500 may transmit the first screen data 902 for video data viewing to the external device 600 according to a setting result. The electronic device 500 may display on the display unit 517 the second screen data 901 for an application related to a photo album.

If a control signal is input from the external device 600, the electronic device 500 may perform a function corresponding to the control signal. For instance, while the electronic device 500 is transmitting video data as first screen data 902 to the external device 600, a control signal may be input to an arbitrary point in the external device 600. According to the input control signal, the electronic device 500 may pause the playback of video data that is being played. The electronic device 500 may transmit the paused first screen data 902 to the external device 600.

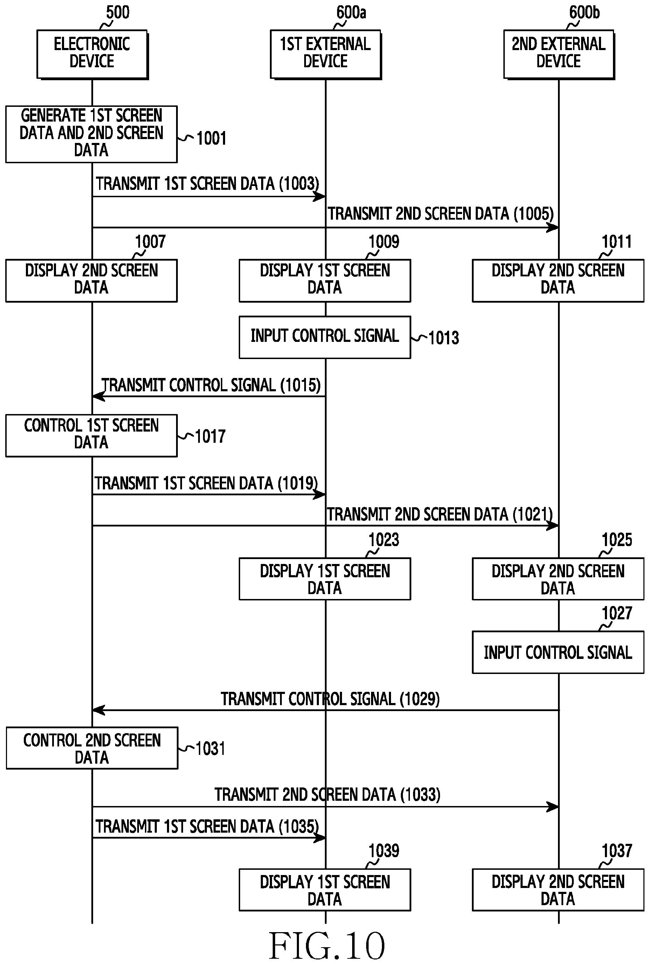

FIG. 10 is a ladder diagram illustrating a flow of providing a screen mirroring service according to another embodiment of the present invention.

Referring to FIG. 10, in step 1001, if the electronic device 500 is set to display screen data in a first operation mode in a first application, and the electronic device 500 is further set to display screen data in a second operation mode in a second application, the electronic device 500 generates first screen data and second screen data. In step 1003, the electronic device 500 transmits the first screen data to a first external device 600a, which is connected to the electronic device 500 for screen mirroring. In step 1005, the electronic device 500 transmits the second screen data to a second external device 600b, which is connected to the electronic device 500 for screen mirroring. In step 1007, the electronic device 500 displays the second screen data.

In step 1009, the first external device 600a displays the first screen data received from the electronic device 500. In step 1011, the second external device 600b displays the second screen data received from the electronic device 500.

In step 1013, the first external device 600a receives an input of a control signal from a user. In step 1015, the first external device 600a transmits the input control signal to the electronic device 500. In step 1017, the electronic device 500 controls the first screen data according to a control signal received from the first external device 600a. In step 1019, the electronic device 500 transmits the controlled first screen data to the first external device 600a. In step 1021, the electronic device 500 transmits the second screen data to the second external device 600b, periodically or in real-time.

In step 1023, the first external device 600a displays the controlled first screen data. In step 1025, the second external device 600b displays the second screen data received from the electronic device 500, periodically or in real-time.

In step 1027, the second external device 600b receives an input of a control signal from the user. In step 1029, the second external device 600b transmits the input control signal to the electronic device 500. In step 1031, the electronic device 500 controls the second screen data according to the control signal received from the second external device 600b. In step 1033, the electronic device 500 transmits the controlled second screen data to the second external device 600b. In step 1035 the electronic device 500 transmits the first screen data to the first external device 600a, periodically or in real-time.

In step 1037, the second external device 600b displays the controlled second screen data. In step 1039, the first external device 600a displays the first screen data received from the electronic device 500, periodically or in real-time.

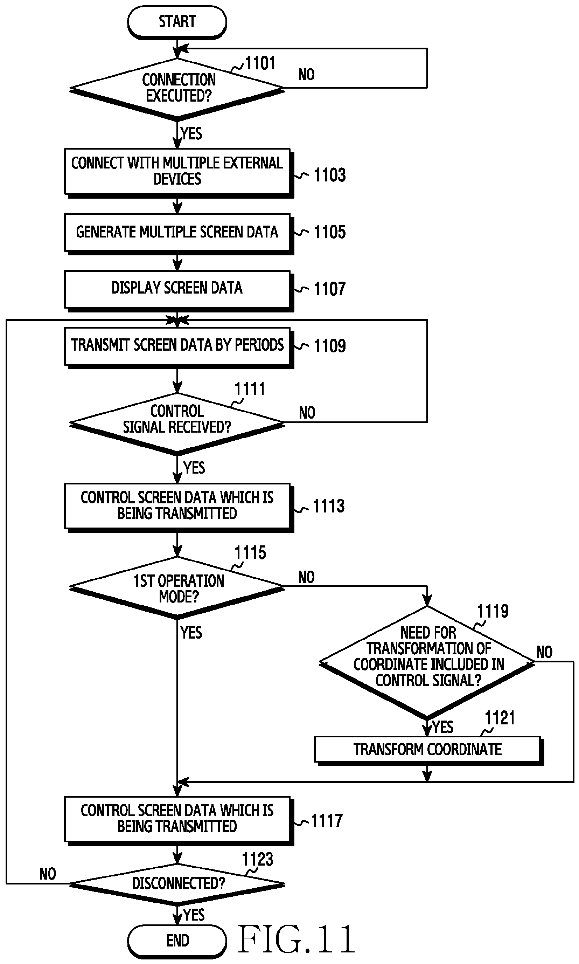

FIG. 11 is a flowchart illustrating a method of performing a screen mirroring service with an external device in an electronic device according to another embodiment of the present invention.

Referring to FIG. 11, if a signal for executing screen mirroring is input from a user in step 1101, the electronic device 500 may perform step 1103. If the signal for executing the screen mirroring is not input from the user in step 1101, the electronic device 500 may wait an input of a screen mirroring execution signal.

In step 1103, the electronic device 500 performs a screen mirroring connection process with the plurality of external devices 600. The plurality of external devices 600 includes a first external device 600a and a second external device 600b. While performing the screen mirroring connection process, the electronic device 500 may check information regarding resolutions supported by the electronic device 500 and information regarding resolutions supported by each of the first external device 600a and the second external device 600b. The electronic device 500 may determine a resolution commonly supported by the electronic device and the first external device 600a. The electronic device 500 may also determine a resolution commonly supported by the electronic device and the second external device 600b. While performing the screen mirroring connection process, the electronic device 500 may send a control channel check request to the first external device 600a and the second external device 600b so as to check whether each of the first external device 600a and the second external device 600b can use a control channel. If the first external device 600a and the second external device 600b are able to use the control channel, the electronic device 500 may receive messages about this capability from the first external device 600a and the second external device 600b.

In step 1105, the electronic device 500 generates a plurality of screen data. In step 1107, the electronic device 500 displays, on the display unit 517. any one screen data among the plurality of screen data. In step 1109, the electronic device 500 transmits the plurality of screen data to the first external device 600a and the second external device 600b, respectively.

If a control signal is received from the external device 600 in step 1111, the electronic device 500 performs step 1113. However, if the control signal is not received in step 1111, the electronic device 500 returns to step 1109. In step 1113, the electronic device 500 checks screen data that is being transmitted to the external device 600 (i.e., first external device 600a and/or second external device 600b) that has transmitted the control signal.

In step 1115, the electronic device 500 checks whether an operation mode corresponding to the screen data that is being transmitted to the external device 600 is a first operation mode. If the electronic device 500 determines that the operation mode corresponding to the screen data is the first operation mode in step 1115, the electronic device 500 performs step 1117. In step 1117, the electronic device 500 controls the screen data that is being transmitted to the external device 600 according to the control signal.

If the electronic device 500 determines that the operation mode corresponding to the screen data is not the first operation mode in step 1115, the electronic device 500 performs step 1119. In step 1119, the electronic device 500 checks whether there is a need for transformation of a coordinate included in the control signal. If the electronic device 500 determines that there is a need for the transformation of the coordinate included in the control signal in step 1119, the electronic device 500 performs step 1121. In step 1121, the electronic device 500 transforms the coordinates and performs step 1117, in which the electronic device 500 controls the screen data that is being transmitted to the external device 600 to correspond to the transformed coordinates.

If the electronic device 500 determines that there is no need for the transformation of the coordinates included in the control signal, the electronic device 500 performs step 1117. In step 1117, the electronic device 500 controls the screen data that is being transmitted to the external device 600 to correspond to the coordinates.

If a screen mirroring disconnection signal is received in step 1123, the electronic device 500 ends the execution of the screen mirroring. If the screen mirroring disconnection signal is not received in step 1123, the electronic device 500 returns to step 1109.

According to an embodiment of the present disclosure, a method for providing a screen mirroring service in an electronic device may include generating first image frame data and second image frame data, transmitting the first image frame data to a first external device 600a, displaying the second image frame data while transmitting the second image frame data to a second external device 600b, receiving a first signal related to an input received from the first external device 600a, in response to the first signal, performing a change of at least a part of the first image frame data and/or an operation related to the first image frame data, transmitting a signal related to the changed first image frame data and/or the operation to the first external device 600a, receiving a second signal related to an input received from the second external device 600b, in response to the second signal, performing a change of at least a part of the second image frame data and/or an operation related to the second image frame data, and displaying a signal related to the changed first image frame data and/or the operation related to the second image frame data while transmitting to the second external device 600b.

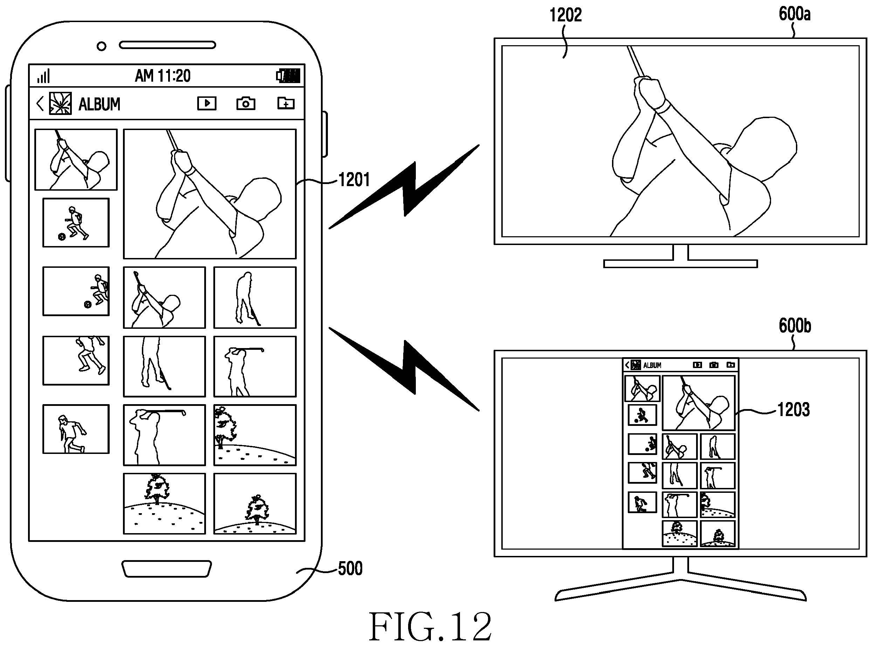

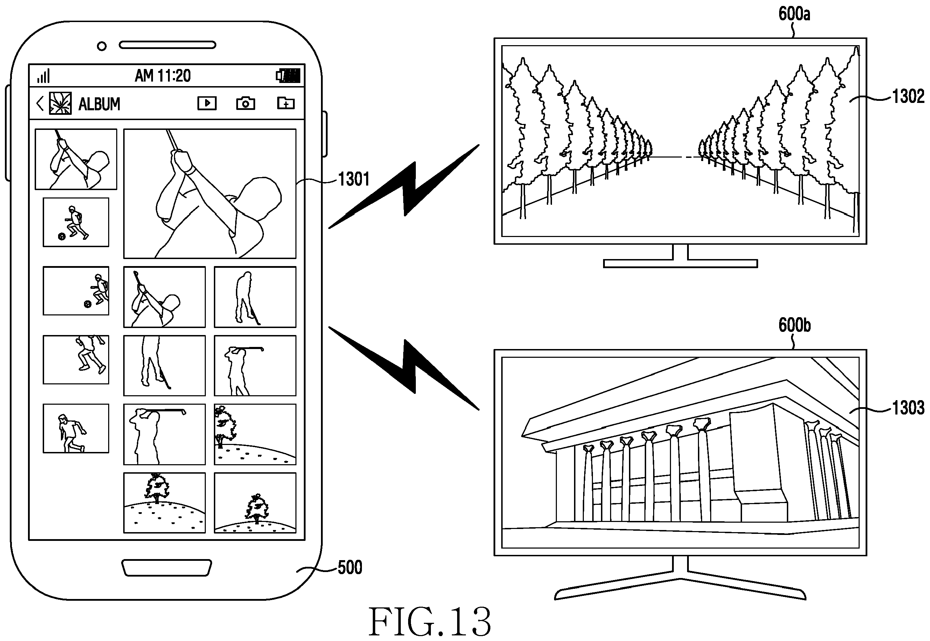

FIG. 12 and FIG. 13 are diagrams illustrating examples of screens according to a method of providing a screen mirroring service in an electronic device and an external device according to another embodiment of the present invention.

Referring to FIG. 12, the electronic device 500 may generate first screen data 1202 and second screen data 1201. The electronic device 500 may transmit the first screen data 1202 to a first external device 600a. The electronic device 500 may display the second screen data 1201 on the display unit 517, and transmit the second screen data 1201 to a second external device 600b.

For example, when a user executes a first application related to video viewing, the electronic device 500 may set to display screen data in a first operation mode in a first application. The electronic device 500 may transmit the first screen data 1202 about video data viewing to the first external device 600a according to a setting result. When the user executes a second application related to a photo album, the electronic device 500 may set to display screen data in a second operation mode in a second application. The electronic device 500 may display the second screen data 1201 about the photo album on the display unit 517 according to a setting result. The electronic device 500 may transmit the second screen data 1201 displayed on the display unit 517 to the second external device 600b. The second external device 600b may display transformed second screen data 1203, which is a transformation of the second screen data 1201 displayed on the electronic device 500.

If control signals are input from the first and second external devices 600a and 600b, the electronic device 500 may check identification information of the first and second external devices 600a and 600b, which have transmitted the control signals. If the electronic device 500 determines that the control signal is received from the first external device 600a, the electronic device 500 may check screen data that is being transmitted to the first external device 600a based on the identification information of the first external device 600a. If the electronic device 500 determines that that the screen data that is being transmitted to the first external device 600a is the first screen data, the electronic device 500 may check an operation mode corresponding to the first screen data. Since the operation mode corresponding to the first screen data is the first operation mode, the electronic device 500 may control the first screen data which is being transmitted to the first external device 600a according to the received control signal.

If electronic device 500 determines that the control signal is received from the second external device 600b, the electronic device 500 may check the screen data that is being transmitted to the second external device 600b based on the identification information of the second external device 600b. If the electronic device 500 determines that the screen data that is being transmitted to the second external device 600b is the second screen data, the electronic device 500 may check an operation mode corresponding to the second screen data. Since the operation mode corresponding to the second screen data is the second operation mode, the electronic device 500 may check the transformation or non-transformation of a coordinate included in the received control signal. If the electronic device determines that there is a need to transform the coordinates included in the control signal, the electronic device 500 may transform the coordinates included in the control signal. The electronic device 500 may perform a function corresponding to the transformed coordinates. Then, the electronic device 500 may control the second screen data that is being transmitted to the second external device 600b according to the performed function corresponding to the transformed coordinates.

Referring to FIG. 13, the electronic device 500 may generate first screen data 1302, second screen data 1303, and third screen data 1301. The electronic device 500 may transmit the first screen data 1302 to a first external device 600a, and transmit the second screen data 1303 to a second external device 600b. The electronic device 500 may display the third screen data 1301 on the display unit 517.

For example, when a user executes a first application related to video viewing, the electronic device 500 may set to display screen data in a first operation mode in a first application. The electronic device 500 may transmit the first screen data 1302 for video data viewing to the first external device 600a according to a setting result. When the user executes a second application related to video viewing, the electronic device 500 may set to display the screen data in a second operation mode in a second application. The electronic device 500 may transmit the second screen data 1303 for video data viewing to the second external device 600b according to the setting result. If executing a third application related to a photo album, the electronic device 500 may display the third screen data 1301 about the photo album.

If control signals are input from the first and second external devices 600a and 600b, the electronic device 500 may check identification information of the first and second external devices 600a and 600b, which have transmitted the control signals. If electronic device 500 determines that the control signal is received from the first external device 600a, the electronic device 500 may check screen data that is being transmitted to the first external device 600a, based on the identification information of the first external device 600a. If the electronic device 500 determines that the screen data that is being transmitted to the first external device 600a is the first screen data, the electronic device 500 may check an operation mode corresponding to the first screen data. Since the operation mode corresponding to the first screen data is the first operation mode, the electronic device 500 may control the first screen data that is being transmitted to the first external device 600a according to the received control signal.

If the control signal is received from the second external device 600b, the electronic device 500 may check the screen data that is being transmitted to the second external device 600b based on the identification information of the second external device 600b. If the electronic device 500 determines that the screen data which is being transmitted to the second external device 600b is the second screen data, the electronic device 500 may check an operation mode corresponding to the second screen data. Since the operation mode corresponding to the second screen data is the first operation mode, the electronic device 500 may control the second screen data that is being transmitted to the second external device 600b according to the received control signal.

As described above, if a control signal is generated in any external device among at least one external device performing screen mirroring with an electronic device, upon control signal generation, an apparatus and method for providing a screen mirroring service according to an embodiment of the present invention may check an operation mode which is set in an application. The electronic device may perform a function based on the generated control signal and the checked operation mode, and may transmit screen data corresponding to the function to the external device. Through this, upon screen mirroring execution, the electronic device may be controlled by the control signal generated in the external device, thus improving a user convenience.

Information, such as program instructions and/or data stored in a memory may be stored in computer-readable recording media. Computer-readable recording media may include, for example, a hard disk, a floppy disk, a magnetic media (e.g., a magnetic tape), an optical media (e.g., a Compact Disc - Read Only Memory (CD-ROM) and a Digital Versatile Disc (DVD)), a Magneto-Optical (MO) media (e.g., a floptical disk), a hardware device (e.g., a Read Only Memory (ROM), a Random Access Memory (RAM), a flash memory, etc.), etc. Program instructions may include, not only mechanical language code, such as code made by a compiler, but also high-level language code executable by a computer using an interpreter, etc. The aforementioned hardware devices may be constructed to operate as one or more software modules in order to perform operations of various embodiments, and vice versa.

A module or programming module according to various embodiments of the present disclosure may include one or more of the aforementioned constituent elements, or omit some of the aforementioned constituent elements, or include additional other constituent elements. Operations carried out by the module, the programming module or the other constituent elements may be executed in a sequential, parallel, repeated or heuristic method. Some operations may be executed in different order or may be omitted, or other operations may be added.

While the invention has been shown and described with reference to certain embodiments thereof, it will be understood by those skilled in the art that various changes in form and detail may be made therein without departing from the spirit and scope of the invention as defined by the appended claims and their equivalents.

### Clauses:

1. An electronic device for providing a screen mirroring service, the device comprising:
   a communication unit configured to connect to an external device; and
   a control unit configured to generate a plurality of screen data, transmit one of the plurality of screen data to the external device, and control the screen data being transmitted to the external device according to a control signal received from the external device.
2. The device of clause 1, further comprising a display unit displaying another one of the plurality of screen data.
3. The device of clause 2, wherein the plurality of screen data are screen data each corresponding to different respective functions executed by the electronic device.
4. The device of clause 2, wherein the plurality of screen data are different screen data each corresponding to execution of a same function in the electronic device.
5. The device of clause 1, wherein the plurality of screen data comprise a first screen data and a second screen data.
6. The device of clause 5, wherein the first screen data and the second screen data have different resolutions.
7. The device of clause 5, wherein the first screen data has image pixel coordinates of a first range, and the second screen data has image pixel coordinates of a second range, and at least a part of the image pixel coordinates of the second range is the same as at least a part of the image pixel coordinates of the first range.
8. A method for providing a screen mirroring service in an electronic device, the method comprising:
   connecting to an external device;
   generating a plurality of screen data;
   transmitting one of the plurality of screen data to the external device; and
   controlling the screen data being transmitted to the external device according to a control signal received from the external device.
9. The method of clause 8, further comprising displaying another one of the plurality of screen data.
10. The method of clause 9, wherein the plurality of screen data are screen data each corresponding to different respective functions executed by the electronic device.
11. The method of clause 9, wherein the plurality of screen data are different screen data each corresponding to execution of a same function in the electronic device.
12. The method of clause 8, wherein the plurality of screen data comprise a first screen data and a second screen data.
13. The method of clause 12, wherein the first screen data and the second screen data have different resolutions.
14. The method of clause 12, wherein the first screen data has image pixel coordinates of a first range, and the second screen data has image pixel coordinates of a second range, and at least a part of the image pixel coordinates of the second range is the same as at least a part of the image pixel coordinates of the first range.
15. A computer-readable storage medium for storing a program which conducts a method comprising connecting to an external device, generating a plurality of screen data, transmitting one of the plurality of screen data to the external device, and controlling the screen data being transmitted to the external device according to a control signal received from the external device.

## Claims

1. An electronic device (500) for providing a screen mirroring service, the device comprising:
a display (517);
a communication unit (511); and
a processor (521) operatively coupled to the display and the communication unit (511);
wherein the processor (521) is configured to:
while controlling the communication unit to transmit a first screen data to be displayed in a display of an external device, to the external device, display a second screen data different from the first screen data in the display of the electronic device, wherein the second screen data is a screen data of a second application being executed in a foreground of the electronic device, and wherein the first screen data is a screen data of a first application being executed in a background of the electronic device;
while controlling the communication unit to transmit the first screen data to the external device and displaying the second screen data in the display of the electronic device, using the communication unit, receive, from the external device, a control signal associated with the first screen data;
in response to receiving the control signal, control, according to the received control signal, the first screen data to be displayed on the display of the external device , and transmit the controlled first screen data to the external device.

2. The device of claim 1, wherein the second screen data and the first screen data are screen data each corresponding to different respective functions executed by the electronic device.

3. The device of claim 1, wherein the second screen data and the first screen data are different screen data each corresponding to execution of a same function in the electronic device.

4. The device of claim 1, wherein the second screen data and the first screen data have different resolutions.

5. The device of claim 1, wherein the second screen data has image pixel coordinates in a first range, and the first screen data has image pixel coordinates in a second range, and at least a part of the image pixel coordinates in the second range is the same as at least a part of the image pixel coordinates in the first range.

6. A method for providing a screen mirroring service in an electronic device, the method comprising:
while transmitting a first screen data to be displayed in a display of an external device, to the external device, displaying a second screen data different from the first screen data in a display of the electronic device, wherein the second screen data is a screen data of a second application being executed in a foreground of the electronic device, and wherein the first screen data is a screen data of a first application being executed in a background of the electronic device;
while transmitting the first screen data to the external device and displaying the second screen data in the display of the electronic device, receiving, from the external device, a control signal associated with the first screen data;
in response to receiving the control signal, controlling, according to the received control signal, the first screen data to be displayed on the display of the external device, and transmitting the controlled first screen data to the external device.

7. The method of claim 6, wherein the second screen data and the first screen data are screen data each corresponding to different respective functions executed by the electronic device.

8. The method of claim 6, wherein the second screen data and the first screen data are different screen data each corresponding to execution of a same function in the electronic device.

9. The method of claim 6, wherein the second screen data and the first screen data have different resolutions.

10. The method of claim 6, wherein the second screen data has image pixel coordinates in a first range, and the first screen data has image pixel coordinates in a second range, and at least a part of the image pixel coordinates in the second range is the same as at least a part of the image pixel coordinates in the first range.

11. A computer-readable storage medium for storing a program which conducts a method comprising:
while transmitting a first screen data to be displayed in a display of an external device, to the external device, displaying a second screen data different from the first screen data in a display of the electronic device, wherein the second screen data is a screen data of a second application being executed in a foreground of the electronic device, and wherein the first screen data is a screen data of a first application being executed in a background of the electronic device,
while transmitting the first screen data to the external device and displaying the second screen data in the display of the electronic device, receiving, from the external device, a control signal associated with the first screen data,
in response to receiving the control signal, controlling, according to the received control signal, the first screen data to be displayed on the display of the external device, and transmitting the controlled first screen data to the external device.
